# EUROPEAN PATENT SPECIFICATION

(11) **EP 2 040 180 B1**
(45) Date of publication and mention of the grant of the patent: **16.01.2019**
(21) Application number: 07117089.8
(22) Date of filing: 24.09.2007
(51) Int. Cl.: G06F 17/30

(54) **ETL-less zero-redundancy system and method for reporting OLTP data**
ETL-loses null-redundantes System und Verfahren zum Melden von OLTP-Daten
Système à zéro redondance sans constitution/extraction et procédé de report de données de traitement transactionnel en ligne

(43) Date of publication of application: 25.03.2009
(73) Proprietor: Hasso-Plattner-Institut für Digital Engineering gGmbH, 14482 Potsdam (DE)
(72) Inventor: Plattner, Hasso Prof., 69198 Schriesheim-Altenbach (DE); Zeier, Alexander, 14057 Berlin (DE); Bog, Anja, 14478 Potsdam (DE); Schaffner, Jan, 10247 Berlin (DE); Krueger, Jens, 12247 Berlin (DE)
(74) Representative: Molnia, David

(56) References cited:
- CA-A1- 2 425 033
- US-A- 5 625 815
- US-A- 5 794 241
- US-A1- 2007 027 904
- RAVISHANKAR RAMAMURTHY ET AL: "A case for fractured mirrors", VLDB JOURNAL, SPRINGER VERLAG, BERLIN, DE, vol. 12, no. 2, 1 August 2003 (2003-08-01) , pages 89-101, XP058137422, ISSN: 1066-8888, DOI: 10.1007/S00778-003-0093-1
- Mike Stonebraker ET AL: "C-Store: A Column-oriented DBMS", Proceedings of the 31st VLDB Conference, 2 September 2005 (2005-09-02), pages 553-564, XP055298338, US ISBN: 978-1-59593-154-2
- DANIEL ABADI ET AL: "Integrating compression and execution in column-oriented database systems", ELECTRONIC PROCEEDINGS, ACM SIGMOD/PODS 2006 CONFERENCE : JUNE 26 - 29, 2006, CHICAGO, ILLINOIS, USA, ACM PRESS, NEW YORK, NY, 27 June 2006 (2006-06-27), pages 671-682, XP058263267, DOI: 10.1145/1142473.1142548 ISBN: 978-1-59593-434-5

## Description

The invention relates to a computer system that implements a computer program for processing database information for both transacting and reporting and to a corresponding method.

Business intelligence (BI) systems provide companies with extensive functionalities to gather, analyze and provide access to their data. Data is collected from multiple heterogeneous sources within a company and possibly additional external sources to create an integrated set of data as a comprehensive base of knowledge and for effective reporting.

Current state-of-the-art architectures of BI systems rely on a centralized data warehouse (DW) or multiple decentralized data marts to store the integrated data set. The process of collecting data from the transactional systems and transporting it into a dedicated storage is called extraction, transformation and loading (ETL). According to Moss and Atre [Business Intelligence Roadmap: The Complete Project Lifecycle for Decision-Support Applications. Addison-Wesley, 2003], it "is by far the most complicated process to be designed and developed in any BI project." According to Ankorion [Change Data Capture - Efficient ETL for Real-Time Bl. DM Review Magazine, January, 2005] the ETL process is traditionally run periodically on a weekly or monthly basis. It is usually run as a batch job during low system load windows, because transforming and cleansing data that is probably only available in poor quality takes a high amount of resources. This implies that data in the BI system is not always up-to-date, which might pose problems for companies that have to react to issues in real-time, e.g. in the banking business.

Referring to Liang and Yu [Revisit on View Maintenance in Data Warehouses. In WAIM '01: Proceedings of the Second International Conference on Advances in Web-Age Information Management, pages 203-211, London, UK, 2001. Springer Verlag] not necessarily all data is replicated into the BI system, but only data of interest. Furthermore, data is usually aggregated to achieve a higher data access performance [Becker and Ruiz. An Aggregate-Aware Retargeting Algorithm for Multiple Fact Data Warehouses. In Yahiko Kambayashi and Mukesh K. Mohania and Wolfram Wöß, editor, DaWaK, volume 3181 of Lecture Notes in Computer Science (LNCS), pages 118-128, Spain, September 2004. Springer Verlag]. In this case, aggregation levels have to be predefined.

This results in some problems. Firstly, information may be queried that has not been replicated into the BI system. Secondly, the system may not able to produce certain levels of detail for a report, which has not been foreseen at the time when the aggregation levels were defined. In such a scenario ad-hoc reports - specific reports that are created and customized by the users themselves - are not entirely possible as the knowledge base is not complete, but is only a filtered version of data stored in the source systems.

Referring to Ramamurthy et al. [A case for fractured mirrors. The VLDB Journal (2003) 12:98-101], a system comprising a fractured mirroring scheme based on the combination of a row store and a column store is presented to better serve ad hoc query workload.

It is therefore an object of the present invention to overcome the deficiencies of prior art systems mentioned above.

This object is solved by a computer system and a method according to the present invention.

A computer system according to the present invention implements a computer program for processing database information for both transacting and reporting. Said computer program comprises a relational database management system component that stores said database information in a row format and a column-oriented data processing component that stores said database information in a column format.

In response to a database update request, said relational database management system component updates said database information stored in said row format, said relational database management system component notifies said column-oriented data processing component of said database update request, and said column-oriented data processing component updates said database information stored in said column format.

Furthermore, in response to a query request, said column-oriented data processing component generates a query response based on said database information stored in said column format.

Preferred embodiments of a computer system according to the present invention are defined in the dependent claims.

The present invention also relates to a computer-implemented method of processing database information for both transacting and reporting, comprising the steps of storing said database information in a row format, storing said database information in a column format, in response to a database update request, updating said database information stored in said row format, locking said database information stored in said row format, updating said database information stored in said column format, and unlocking said database information stored in said row format after said database information stored in said column format has been updated, and in response to a query request, generating a query response based on said database information stored in said column format.

In a further embodiment, the present invention relates to a computer system that implements a computer program for processing database information for both transacting and reporting, wherein said computer program comprises a relational database management system component that stores said database information in a row format and a plurality of networked computers that implements a column-oriented data processing component that stores said database information in a column format across said plurality of networked computers.

In response to a database update request, said relational database management system component updates said database information stored in said row format, said relational database management system component notifies said column-oriented data processing component of said database update request, and said column-oriented data processing component updates said database information stored in said column format.

Furthermore, in response to a query request, said column-oriented data processing component generates a query response based on said database information stored in said column format.

For a more complete understanding of the present invention and its features and advantages, reference is made to the following description, taken in conjunction with the accompanying drawings, in which:
Fig. 1 illustrates a traditional data warehouse architecture;
Fig. 2 illustrates a data warehouse architecture according to the present invention;
Fig. 3 illustrates the integration of a Text Retrieval and Information Extraction engine (TREX) with a traditional relational database management system MaxDB;
Fig. 4 illustrates row-oriented storage as compared to column-oriented storage;
Fig. 5 illustrates horizontal and vertical fragmentation; and

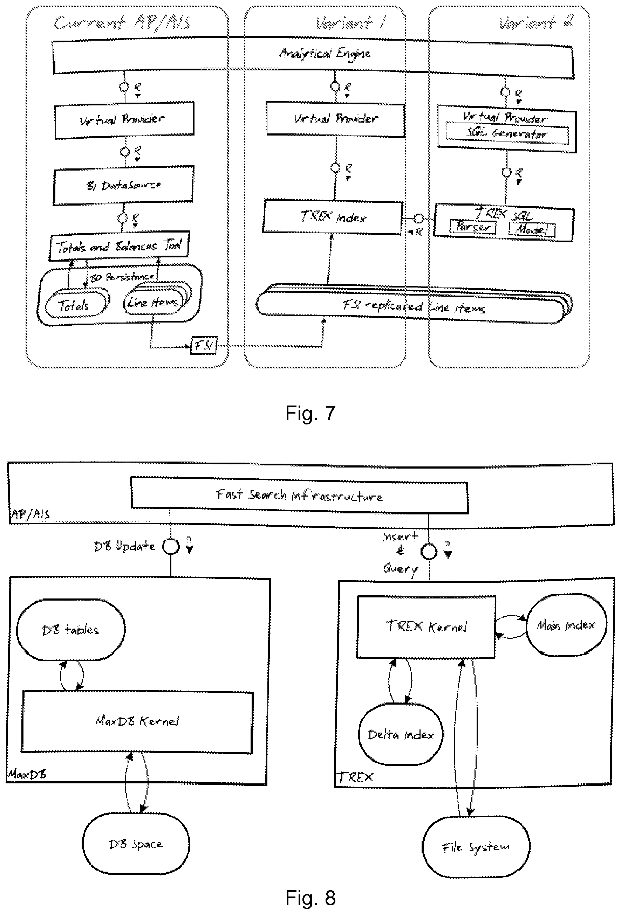

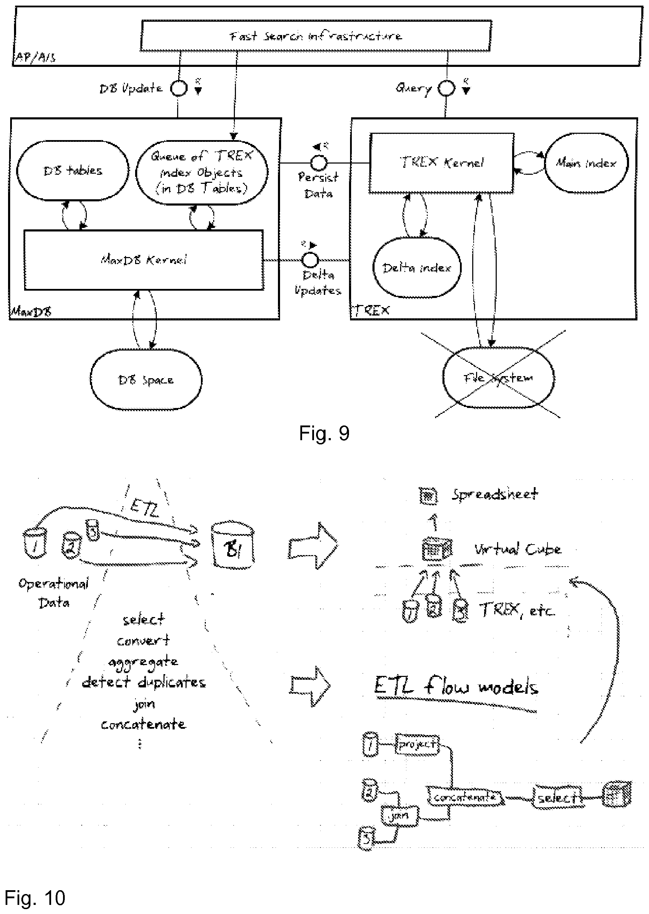

Figs. 6 - 10 further illustrate a preferred embodiment of the present invention.

The present invention proposes an architecture, which is based on the utilization of main memory technology in combination with a column-oriented data structure. In this architecture data retrieval as well as data insertion performance are accelerated, so analytical as well as transactional systems can work on the same set of data. The solution of the present invention aims at omitting the replication of data between the analytical and transactional systems. Specific steps of transformation for a report as part of the former ETL process are executed during its run-time on-the-fly. Keeping only one set of data for both scenarios yields the advantage that the complete set of company data is available and can be used for reporting.

### Related Work

The present invention introduces a new, real-time capable architecture for reporting. Thus, it must be positioned among existing DW architectures. These will, therefore, briefly be described. Afterwards, existing architectures that allow for reporting on transactional data will be discussed.

### Common Data Warehouse Architectures

The general architecture of DW systems is well known. Inmon's characteristics for DW systems, i.e. that data in a warehouse must be subject-orientated, integrated, time variant, and non-volatile [Inmon. Building the Data Warehouse, 3rd Edition. John Wiley & Sons, Inc., New York, NY, USA, 2002, p. 31], led to an architecture separating operational and analytical data. Data in On-Line Transactional Processing (OLTP) systems is organized according to the relational model (defined by Codd [A Relational Model of Data for Large Shared Data Banks. Communications of the ACM, 13:377-387, June 1970]), i.e. data is highly normalized in order to ensure consistency and to run day-to-day operations on these systems. OLAP systems, in contrast, organize data according to the dimensional model, using for example the star or snowflake schema. The reason for this is mainly the wish to achieve the best query performance. Since OLAP systems are read-only, denormalized data storage is permissible as data consistency is less important than in OLTP systems.

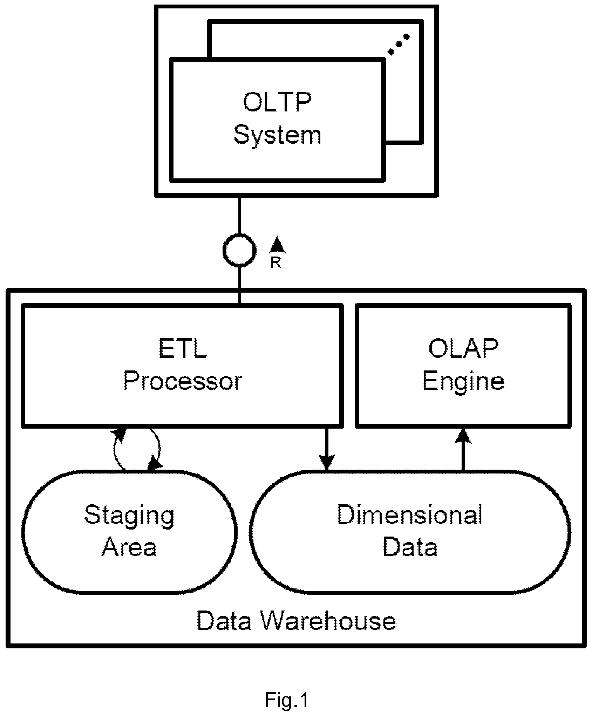

This leads to an architecture as it is shown in Figure 1, using the Fundamental Modeling Concepts (FMC) block diagram notation [A. Knöpfel, B. Gröne, and P. Tabeling. Fundamental Modeling Concepts: Effective Communication of IT Systems. John Wiley & Sons, Inc., May 2006]. The DW contains an ETL processor which extracts data from various OLTP sources into a staging area, where data transformations for cleansing and integration are applied. Once this process has been completed, the ETL processor stores the data according to a dimensional data storage paradigm, so that an OLAP engine can run queries against this dimensional data store.

With the proliferation of BI technologies, this general architecture has been extended with concepts such as data marts or Operational Data Stores (ODS). Data marts aim at decentralizing the DW in order to optimize performance around certain subject areas [W. H. Inmon. Building the Data Warehouse, 3rd Edition. John Wiley & Sons, Inc., New York, NY, USA, 2002]. The downside is that in data mart architectures, the DW does no longer provide the one consistent view on all relevant data in an enterprise, which was an original intention of DW systems. ODSs store OLTP data, but use an integrated data schema, i.e. the ETL steps of data mapping and cleansing are applied before moving data into an ODS. The result is increased timeliness of the data on which reporting can be done. This has led to the inclusion of similar features into traditional DW systems, causing the borders between OLTP and OLAP systems to blur. In the following, we will focus on related architectures for reporting on OLTP data.

### Latency-reduced Reporting Architectures

As already mentioned above, the ETL process is the point in DW architectures that (dis-)connects OLTP and OLAP systems. One possible optimization would be to shorten the intervals between ETL runs to a minimum. The main disadvantage of such Microbatch approaches [J. Adzic, V. Fiore, and S. Spelta. Data Warehouse Population Platform. Lecture Notes in Computer Science (LNCS), 2209, 2001] is the resource consumption of the frequent ETL runs: The ETL process should only run in a defined batch window, because the query performance of the DW is dramatically affected during ETL processing time.

In order to achieve real-time reporting on transactional data, data transformation has to be done at query run-time. Therefore, architectures have been proposed that move the data transformation outside of the ETL process. Instead, the transformations are done in the warehouse after extraction and loading. Such processing is called ELT, respectively [L. Moss and A. Adelman. Data Warehousing Methodology. Journal of Data Warehousing, 5:23-31, 2000]. Also, push architectures for ETL have been proposed in order to replace bulk processing with the handling of deltas on a business or database transaction level, cf. [R. Kimball and J. Caserta. The Data Warehouse ETL Toolkit: Practical Techniques for Extracting, Cleaning. John Wiley & Sons, Inc., New York, NY, USA, 2004, p. 427]. Kimball further suggests to separate historical data from recent data in a warehouse. The recent data is constantly copied into the so-called real-time partition using the push approach described above. In doing so, the DW can still be optimized for queries on historical data, while recent events in an enterprise are also recorded in the warehouse. Brobst suggests to extend typical message broker infrastructures in a way that they leverage the ETL push architecture described above [S. Brobst. Enterprise Application Integration and Active Data Warehousing. In Proceedings of Data Warehousing 2002, pages 15-23, Heidelberg, Germany, 2000. Physica-Verlag GmbH]. This is done by hooking a DW adapter into the message bus that subscribes to messages which are relevant for the data in the warehouse. Necessary data transformations are done in the warehouse, resembling the concept of ELT, also described above. While the presented approaches come with less data-capture latency than traditional, batch-oriented ETL architectures, changes in the OLTP systems must still be propagated to the DW, where they are harmonized and stored redundantly using dimensional data models. In order to have a real-time view on the enterprise in reporting, the replication between OLTP and OLAP systems must be reduced to the minimum:
The notion of virtual ODS, as opposed to the traditional, physical ODS discussed above, describes a pull-oriented DW architecture which gathers the requested information at query run-time. The ODS is virtual in the sense that it translates DW queries into downstream queries to OLTP or third-party systems without persisting any data. Inmon argues that virtual ODS architectures are of limited use when the data in the source systems is not integrated [W. H. Inmon. Information Management: World-Class Business Intelligence. DM Review Magazine, March, 2000]. This is due to the fact that virtual ODS systems do not provide ETL transformations at run-time, which would be necessary to provide for data integration. The reason is that ETL transformations are costly and there is, thus, a tradeoff between the extent of functionality in virtual ODS and end-user response times. However, virtual ODS is the concept which comes closest to the reporting approach for transactional data.

### High-performance Reporting on OLTP Data

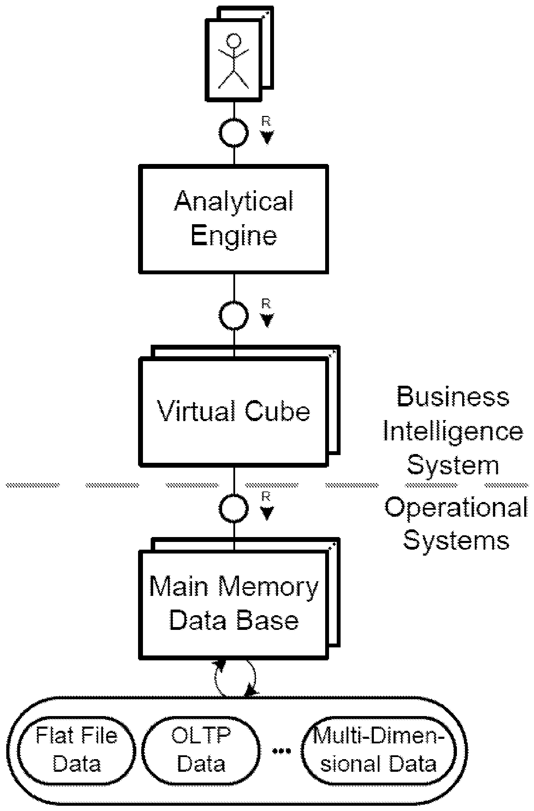

The present invention introduces an architecture for reporting where data is not stored in any other system apart from the transactional systems. As a result, no replication into a DW system occurs, but data is accessed directly in the transactional systems when queried. Figure 2 provides a high-level overview of the target architecture.

As a basis the present invention uses a main memory database to access all data. Using main memory technology is one aspect of the solution according to he present invention to provide short response times for reporting directly on transactional data. Another aspect is to use a data structure capable of providing fast read access as well as efficient write access.

### On-the-flv Data Transformation

The analytical engine accesses data through a so-called *virtual cube.* The virtual cube provides the same interface for analysis as given by standard cubes in DW systems. This includes drilling between levels of hierarchy as well as slicing and dicing regarding different metrics. In an implementation according to the present invention, a virtual cube plug into the OLAP engine of SAP Bl. In consequence, all the reporting front-ends supported by SAP BI can be used to launch queries against the OLTP data. Available front-ends include HTML reports and Microsoft Excel-based reports. In the case of SAP BI, predefined queries must be run inside these reporting front-ends. These queries can be specified graphically (using a query design tool) or using Multidimensional Expressions (MDX) [http://msdn2.microsoft.com/en-us/library/ms145506.aspx].

In comparison with traditional cubes in DW systems, the virtual cube does not store any data. Instead, it is a collection of functions that are executed during the run-time of a report. The virtual cube maps the reporting interface it exposes to calls against the underlying main memory database that contains the OLTP data. The queries are sent to the OLAP engine, which then executes OLAP queries against the virtual cube. The latter transforms the incoming OLAP queries into queries against the used main memory database with the OLTP data. Due to providing the OLTP data to the OLAP engine directly, data queried by reports is always up-to-date.

Since the OLTP data in the main memory database is on the highest possible level of granularity, which means that the data does not contain aggregates, the virtual cube maps most OLAP queries to aggregation calls against the main memory database. Therefore, aggregations needed for a certain level within the hierarchy are created on-the-fly. No further storing of totals is needed and the data explosion problem where every possible aggregation value is calculated in advance and stored in the cube structure is avoided.

During a performance evaluation of a case study scenario, which will be presented in the next section, 500,000 totals that have been created on the basis of 10 million line items were encountered. A ratio of 1 totals to 20 line items seems to be inefficient. As will be discussed later, the granularity is, for example, too high for creating a balance sheet report: there, the totals read from the database still have to be aggregated in the source code afterwards. The original idea to read exactly the total necessary for the report, without further calculations and accessing multiple fields in the database, is not met here. The low ratio is thus inadequate regarding storage space and update performance. If data is inserted or updated, multiple toals must be updated as well, which usually happens in the same database transaction in financial accounting to keep a consistent view. As a result, the actual database transaction is protracted and many rows are locked exclusively for the write access in case of row-level locking. Not storing any totals reduces the management overhead and, in addition, speeds up database transactions with write access of line items.

### Insert-only Characteristics of Financial Data

So far the disadvantages of having two physically separate data stores for OLTP and OLAP applications have been discussed. However, among the big benefits of replicating the data from an operational to a DW system are that OLAP and OLTP operations are not competing for resources (i.e. locks) on a single copy of the data; this contention is usually significant since OLAP operations typically touch a lot of data. This is especially the case if the data is not pre-aggregated in separate copies and if ACID properties for the OLTP transactions are required, which is particularly important for financial data. Another benefit of copying the data to the DW is that many reports take history, i.e. changes of the data over time, into account. OLTP data usually only represents the latest consistent snapshot of the data.

A reporting approach operating on top of OLTP data has to deal with both the contention and the history problem. In the following, it will be described how both problems can be solved by exploiting the insert-only characteristics of financial data.

Financial accounting, which is a main purpose of the kinds of OLTP systems, is an activity which requires to record every change of the data. For example, if the value of a fixed asset has to be adjusted for deprecation reasons, the value is not updated; instead, a correctional posting is created which "moves" the deducted funds from one account to another. This posting would appear in the bookkeepers journal as a new line in the fixed assets accounts, saying that there is a deduction of a certain value, and another new line in the deprecations account where this value is added. From a database perspective, data is either read or inserted. Update and delete operations are not allowed in this model, because "accountants don't use erasers", as Pat Helland has recently put it [http://blogs.msdn.com/pathelland/archive/2007/06/14/accountants-don-t-use-erasers.aspx]. Database locks are, thus, no longer required. The combination of an insert-only data model for OLTP data and using a main memory database as the only one persistent storage for this data allows for direct reporting on top of the OLTP data with short response time during normal operations of the OLTP system. Temporal databases such as Google's Bigtable [F. Chang, J. Dean, S. Ghemawat, W. C. Hsieh, D. A. Wallach, M. Burrows, T. Chandra, A. Fikes, and R. E. Gruber. Bigtable: A Distributed Storage System for Structured Data. In USENIX'06: Proceedings of the 7th conference on USENIX Symposium on Operating Systems Design and Implementation, pages 15-15, Berkeley, CA, USA, 2006. USENIX Association], for example, provide inherent support for insert-only data models, because they treat updates of a field as an insert operation with a timestamp associated.

As stated above, the proposed architecture is somewhat comparable to virtual ODS, where DW queries are redirected against OLTP systems without physically persisting any data. In contrast to the proposed reporting architecture, virtual ODS is a concept for direct access to snapshot OLTP data, i.e. historical data is not taken into account. Because of the insert-only data model for OLTP, described above, our reporting architecture does inherently support reports on historical data: Since an append-only journal is kept for every account, previous values of an account are not lost, but can be reconstructed.

### One Data Store for all Scenarios

The entire data set will be kept in main memory to ensure short response times. According to Yu [C. Yu. High-Dimensional Indexing: Transformational Approaches to High-Dimensional Range and Similarity Searches, volume 2341/2002. Springer-Verlag New York, Inc., Secaucus, NJ, USA, 2002, p. 137] the assumption that databases are too large to fit into main memory is increasingly being challenged as main memory gets cheaper and larger. On the other hand, Gantz et al. [J. F. Gantz et al. The Expanding Digital Universe: A Forecast of Worldwide Information Growth Through 2010. IDC white paper - Sponsored by EMC, http://www.emc.com/about/destination/ digital_universe/, March 2007] argue that organizations worldwide will severely suffer from what they call "information explosion" over the next few years. In 2007 more information is created already without enough capacity available to store it. 95 percent of the information creating the explosion, however, is unstructured data, e.g. music, photos, videos, digital telephony and television, sensor data, or e-mail.

The financial transactional data of the past 5 years of a medium sized company were analyzed. The size of the company data was about 20 GB of space in the file system. After transforming it into the data structure of the main memory database and compressing it, its size was approximately 1 GB. Consequently, keeping the entire transactional data set completely in main memory seems feasible at least for small and medium sized companies.

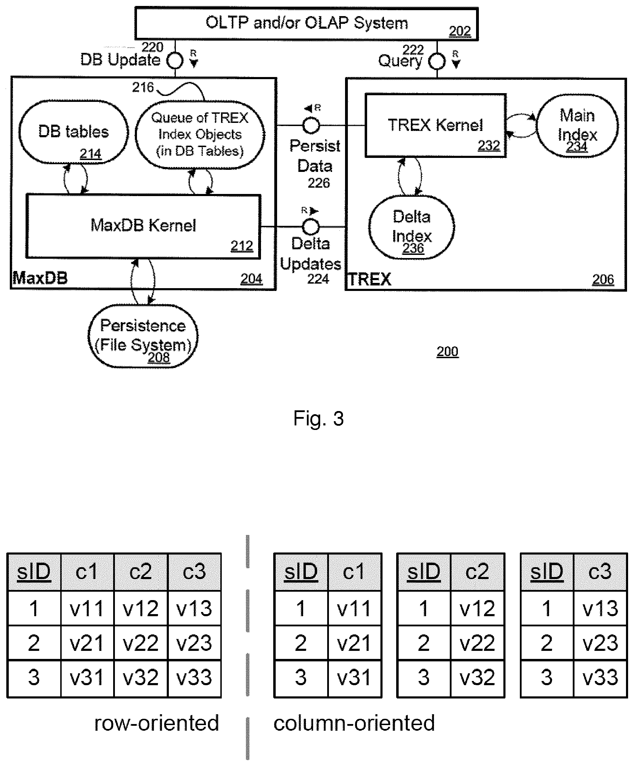

SAP's Text Retrieval and Information Extraction engine (TREX) was used as main memory storage system. TREX has originally been developed as a text search engine for indexing and fast retrieval of unstructured data. The solution according to the present invention implies the usage of TREX as a fully fledged main memory database. TREX, however, does not yet entirely support the ACID (Atomicity, Consistency, Isolation, Durability) properties, which however is a prerequisite for the transactional scenario. Therefore, TREX was combined with a traditional relational database management system (RDBMS). Figure 3 shows how TREX is integrated with MaxDB and how read and write access is distributed between TREX and MaxDB.

Requests that change data or insert new data are handled by MaxDB, which ensures the ACID properties. The MaxDB Kernel stores the changes in the database tables and manages queue tables for TREX. These queue tables contain the information, which data has been changed or inserted. TREX is notified about the changes and can update its own data with the help of the queue tables. This happens within the same database transaction. Accordingly, TREX and MaxDB share a consistent view of data.

Database queries and analytical reports in return are directly handled by TREX. TREX arranges its data in the so-called main index. The main index holds the same data as the database tables in MaxDB, though tables are stored differently. In RDBMS tables are stored row-wise. In TREX they are stored column-wise. The advantage of this data structure is discussed in the next section. Since the main index is highly optimized for read access, TREX holds a so-called delta index to allow fast data retrieval while concurrently updating its data set. All updates and inserts taken from the queue tables are collected in the delta index. When responding to a query, data in the delta index as well as the main index is accessed to provide a consistent view of the entire data set compared with the database tables of MaxDB. The delta index is not as compressed and optimized for read access as the main index. Therefore, it should not exceed a size limit. Upon reaching a certain size or in pre-set time intervals the delta index is merged with the main index. Merging the delta index with the main index neither blocks read nor write access of data within TREX.

In one embodiment of the present invention data is stored redundantly in database tables and TREX's data structure only to ensure the ACID properties. In an alternative embodiment this redundancy can be eliminated. OLTP read and write access as well as OLAP reporting will then use the data set of TREX. As a prerequisite for OLTP write access, TREX is required to fully support the ACID properties. It was analyzed which ACID properties TREX is able to support and if TREX might support them entirely: Atomicity is implemented in TREX using so-called multi index calls that resemble the two-phase-commit protocol in distributed database systems. Consistency is supported by monitoring constraints and aborting and rolling back transactions if any rules are broken. Log files ensure durability. Isolation is the only property that is currently not available in TREX. TREX only provides the isolation level called read committed, which means that lost updates or phantoms may occur in the data set. In one embodiment of the present invention, this might be solved by serializing transactions through application locks. In Another embodiment the architecture can be built upon another existing column-based main memory storage system, like MonetDB or C-Store.

Furthermore, the implementation of standardized interfaces for database access, e.g. SQL, is desirable. A prototypical SQL interface for TREX was implemented as a proof of concept. TREX itself provides programming interfaces for ABAP, C++ and Python. Simple queries including aggregation functions, like SUM, MIN, MAX, AVG, COUNT, grouping and sorting of columns, and basic conditional processing are possible.

However, since main memory is volatile at least one persistent storage besides the main memory data set has to remain for backup in further embodiments. After system crashes the main memory data structure will be rebuild from there. As aforementioned, data in TREX is stored differently compared to data storage in traditional RDBMS. The data structure allowing fast access for reporting on transactional data without the need to aggregate in advance is discussed in the following.

### Data Structures and Compressing Techniques

Companies create huge amounts of data during their daily operations. Two different areas for gaining performance are targeted in this section. Firstly, performance is achieved by exploiting specific data structures. The star and snowflake schema of current DW architectures provide fast access of key performance figures grouped by dimensions. They are optimized for performance by avoiding large and complicated joins as would be the case when using the relational data model in third normal form for analytics. However, the star schema is relatively inflexible concerning unpredictable reporting behavior, because dimensions are defined before run-time. Additionally, changes of requirements usually result in changes of the schema, too, or a redesign of the entire schema [W. H. Inmon. When Are Star Schemas Okay in a Data Warehouse? B-Eye: Business Intelligence Network - The Global Vision for BI and Beyond, http://www.b-eye-network.com/view/ 5626, July 2007].

Secondly, keeping data entirely in main memory is another way to achieve an adequate query performance. Main memory space, although growing in size, is still much more expensive and restricted in size than is disk space. Therefore, to fit such an amount of data in main memory, compression algorithms with a maximum compression rate and a minimum negative impact on insertion and retrieval performance have to be utilized.

### Column-oriented

Since only one data storage is used in the proposed architecture, a data structure capable of providing appropriate read and write access performance for transactional scenarios as well as retrieval performance for analytical scenarios has to be found. Schemes used in the analytical scenario being partly denormalized are not viable in this case as they do not perform well in transactional scenarios. Instead of denormalization for fast retrieval access, the approach of the present invention goes in the opposite direction and takes normalization a step further from the relational data model. To avoid complex joins database tables are not denormalized and thereby pre-calculated joins achieved, but the tables are broken down to column level. The concept of "turning the tables" has been introduced more than 20 years ago. In 1985 Copeland and Khoshafian introduce a fully decomposed storage model (DSM) [G. P. Copeland and S. Khoshafian. A Decomposition Storage Model. In S. B. Navathe, editor, Proceedings of the 1985 ACM SIGMOD International Conference on Management of Data, Austin, Texas, May 28-31, 1985, pages 268-279. ACM Press, 1985]. Each column is stored by itself (see Figure 4) and the logical table structure is preserved by the introduction of surrogate identifiers.

The storage of surrogate identifiers leads to extra storage consumption, which can be overcome, for example, by using the positional information of the attributes in the column as identifier. Even more elaborate approaches exist that avoid the redundant storage of attribute values, e.g. null values, or in the case of columns where only a small amount of differing values exists. The idea of storing data in columns instead of rows has been implemented in multiple projects, for example, MonetDB [P. Boncz. Monet: A Next-Generation DBMS Kernel for Query-Intensive Applications. PhD thesis, Universiteit van Amsterdam, Amsterdam, Netherlands, May 2002], C-Store [M. Stonebraker et al. C-Store: A Column-oriented DBMS. In VLDB '05: Proceedings of the 31st International Conference on Very Large Data Bases, pages 553-564. VLDB Endowment, 2005], or Google's BigTable [F. Chang, J. Dean, S. Ghemawat, W. C. Hsieh, D. A. Wallach, M. Burrows, T. Chandra, A. Fikes, and R. E. Gruber. Bigtable: A Distributed Storage System for Structured Data. In USENIX'06: Proceedings of the 7th conference on USENIX Symposium on Operating Systems Design and Implementation, pages 15-15, Berkeley, CA, USA, 2006. USENIX Association] to name a few.

Column-oriented storage uses the observation that not all columns of a table are usually queried in a report or are needed to create the result. Compared to the relational model used in databases where all columns of two tables even those that are not necessary for the result are accessed the column-oriented approach yields a more lightweight solution. Only the columns needed directly for creating the result have to be accessed.

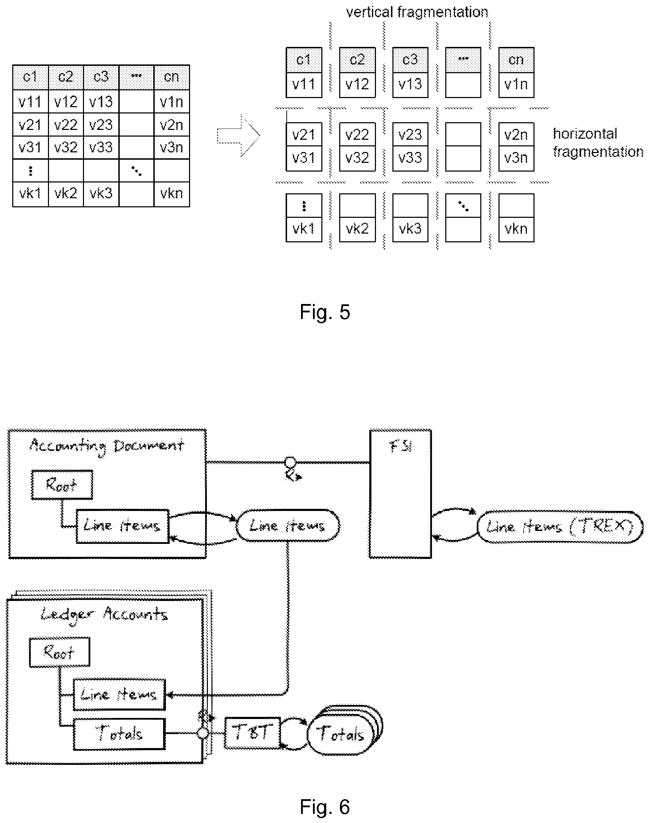

In column-oriented data structures, compared to traditional analytical or transactional schemes the number of joins to compose the same information is higher, but the joins themselves have a lower complexity and need to access less data. Accessing single columns for values and computing joins can be massively parallelized when distributing data on multiple machines. Two basic approaches for the distribution of data onto multiple machines exist. These are horizontal and vertical fragmentation, see Figure 5. Horizontal fragmentation separates tables into sets of rows and distributes them on different machines in order to perform computations in parallel. It has been introduced, for example, to solve the problem of handling tables with a great number of rows, like fact tables in DW systems [A. Y. Noaman and K. Barker. A Horizontal Fragmentation Algorithm for the Fact Relation in a Distributed Data Warehouse. In CIKM '99: Proceedings of the Eighth International Conference on Information and Knowledge Management, pages 154-161, New York, NY, USA, 1999. ACM Press]. Column-orientation facilitates vertical fragmentation, where columns of tables are distributed on multiple machines. TREX uses both approaches simultaneously [T. Legler, W. Lehner, and A. Ross. Data Mining with the SAP NetWeaver BI Accelerator. In VLDB '06: Proceedings of the 32nd International Conference on Very Large Data Bases, pages 1059-1068. VLDB Endowment, 2006]. Besides the advantage of parallel computation, through fragmentation the entire set of data can be kept in memory without the need of using high-end hardware technology.

### Tuning the Columns

Compression is a solution to fit more data into limited memory space. Compressing data when writing and decompressing when reading, however, puts more load on the CPU. A trade-off between the increase of processing time when compression is used and increased memory space usage without compression has to be balanced here. However, a widening gap between the growth rate of CPU speed and memory access speed can be observed [N. R. Mahapatra and B. Venkatrao. The Processor-Memory Bottleneck: Problems and Solutions. Crossroads, 5(3):2, 1999]. While CPU speed grows at a rate of 60 percent each year, the access time to memory (DRAM) increases less than 10 percent per year. This growing discrepancy compensates for the usage of data compression by diverting some of the processing power to compression and decompression while increasing the information density and thereby decreasing the amount of memory access.

Data compression techniques exploit redundancy within data and knowledge about the data domain for optimal results. Column-oriented storage in this case contributes to optimize compression. Attributes within one column are of the same type of data or structure and therefore bear strong similarities among one another. Abadi et al. [1] characterized and evaluated a set of compression techniques working particularly well with column-oriented storage, e.g. run-length encoding (RLE) or bit-vector encoding. In RLE the repetition of values is compressed to a (value, run-length) pair. For example the sequence "aaaa" is compressed to "a[4]". This approach is especially suited for sorted columns with little variance of attribute values. For the latter if no sorting is to be applied, bit-vector encoding is well suited. Many different variants of bit-vector encoding exist. Essentially, a frequently appearing attribute value within a column is associated with a bit-string, where the bits reference the position within the column and only those bits with the attribute value occurring at their position are set. The column is then stored without the attribute value and can be reconstructed in combination with the bit-vector. Approaches that have been used for row-oriented storage are also still applicable for column-oriented storage. One example is dictionary encoding, where frequently appearing patterns are replaced by smaller symbols.

Currently, TREX uses integer and dictionary encoding in combination with bit-vector encoding. Each existing value for an attribute is stored in a dictionary table and mapped to an integer value. Within the columns only the integer values are stored. As a first advantage attribute values existing multiple times within a column reference the same row within the dictionary table. Thereby redundant storage of attribute values is eliminated and only redundancy of the integers referencing the same attribute value occurs. The second advantage is that the integers used for encoding consume less storage space than the actual attribute values.

Due to the compressed columns, the density of information in relation to the utilized memory space is increased. As a result more relevant information can be loaded into the cache for processing at one time. Less load actions from memory into cache are needed in comparison to row storage, where even columns of no relevance to the query are loaded into the cache without being used.

### Performance Evaluation

For validating the reporting architecture according to the present invention, the performance of a prototypical implementation was benchmarked against the existing SAP DW product.

In order to establish a setting in which the existing DW product and the prototype are comparable, focus was laid on use-cases where the DW has to access OLTP data. While several scenarios in the field of financial accounting have been investigated in the course of the project, only one case study is reported in the following.

The case study contains two use cases which represent a small subset of the balance sheet report. Managers use the balance sheet report not only at the end of an accounting period, but also to run "what-if simulations" of what the balance sheet would look like if the current period would end on the day the query is run. The first use case is to select the (credit and debit) totals for all accounts of a company in a period, which is one of the main steps in balance sheet creation. The second use case is to select the debit and credit totals for one specific account and period. Totals of specific accounts are frequently checked in order to get an overview of certain types of spending, earnings, and special assets of a company.

The DW system has to collect the totals of the accounts from the Enterprise Resource Planning (ERP) system (e.g. SAP Business ByDesign). The ERP system creates pre-aggregated totals on the basis of the line items, which it manages using a dedicated database table. The reason for storing these totals is that they carry a specific meaning in the context of financial accounting and are therefore often queried. The pre-aggregation of totals resembles a classical OLAP setting, because data in DW systems is typically pre-aggregated. In the chosen balance sheet scenario, the totals need to be on a very high level of aggregation. The totals stored by the ERP system are, however, on a more fine-grained aggregation level. In order to produce the balance sheet, an additional aggregation step must thus be performed after the data has been read from the database.

Yet, the performance figures that we present here do not take this additional aggregation time into account: while also end-to-end performance tests have been carried out, that consider the time consumed by the all involved components as well as the network time, the focus here is on the data access layer. Thus, the response time of the database underlying the ERP system was measured when retrieving the totals from the respective table to the time for performing an on-the-fly aggregation of the line items using the main memory-based approach presented above. For the first use case (retrieving all totals), the ERP database (MaxDB) needs to run a full table-scan against the totals table, as does the main memory database (TREX) on the line item level. The second use case (retrieving few specific totals) yields a cache-hit in MaxDB, while TREX still needs to perform a full scan on the "amount" column of the table containing the line items.

The test data used for the measurements was taken from a medium enterprise in the brewery industry. Their accounting data for one fiscal year (roughly 36 million accounting document line items) were taken, the statistical distribution of the values in the corresponding table analyzed, and from that different test data sets generated. The data sets are characterized by the number of accounting documents, the total number of accounting document line items, and the number of pre-aggregated totals that the used ERP system creates and manages for the data set. The different data sets are shown in Table 1.

**Table 1: Different Test Data Sets**

| **Size** | **Accounting docs** | **Line items** | **Totals** |
|---|---|---|---|
| XS | 30,000 | 100,000 | 10,159 |
| S | 150,000 | 500,000 | 49,002 |
| M | 300,000 | 1,000,000 | 100,952 |
| L | 1,500,000 | 5,000,000 | 442,019 |
| XL | 3,000,000 | 10,000,000 | 474,331 |

The performance of both MaxDB and TREX has been measured on the same machine. The hardware configuration of the testbed is shown in Table 2.

**Table 2: Testbed Hardware**

| **Component** | **Description** |
|---|---|
| Operating System | Gentoo Linux 2.6.21-gentoo |
| CPUs | 4 x Dual Core AMD Opteron |
| | @ 2.8GHz 1MB L2 Cache |
| Main Memory | 32 GB @ 667 MHz |
| Hard Drives | 2 x 300GB |
| | (reads 89 MB per second) |
| MaxDB Version | 7.6.00.37 for Linux x86_64 |
| TREX Version | 7.10.04.00 (Build: 2007-06-19) |

Table 3 shows the results of the measurements in seconds. All results are averaged over 20 queries. Before the measurements were started, 40 queries were ran against the database to make sure that the measurements take the database cache into account.

**Table 3: Measurement Results (in Seconds)**

| **Data set** | **Use Case 1 (All Accounts)** | | **Use Case 2 (Specific Account)** | |
|---|---|---|---|---|
| | MaxDV | TREX | MaxDB | TREX |
| XS | 0.12 | 0.10 | 0.04 | 0.06 |
| S | 0.46 | 0.34 | 0.10 | 0.23 |
| M | 1.04 | 0.59 | 0.16 | 0.42 |
| L | 3.83 | 1.80 | 0.59 | 1.50 |
| XL | 4.50 | 2.16 | 0.66 | 2.10 |

The average response times of TREX are similar for both use cases. This is due to the fact that TREX has to do a full table scan for both use cases. In the first use case (retrieving the totals of all accounts), MaxDB has to perform a full table scan on the table containing the pre-aggregated totals. Still, the average response time of TREX is slightly better than the average of MaxDB. It is noteworthy that the ratio of the number of rows in the totals table in MaxDB to the number of line items in TREX is about 1:10 for most data set sizes. In the second use case (retrieving totals for a specific account), in contrast, TREX is slower than MaxDB. Yet, the calculation on-the-fly allows for an easier architecture of the ERP system in the sense that no totals have to be updated regularly so that they are consistent with the accounting document line items. The slightly slower query performance for specific totals buys more flexibility, because it enables to calculate totals directly on the aggregation level required for the balance sheet, as opposed to post-query aggregation in the ERP system.

### Conclusion

The present invention proposes an architecture for reporting that directly uses an OLTP system as the data source and, thus,
- does not require bulk ETL loads to replicate the data to a DW system,
- does not require to manage aggregates of the OLTP data on various different levels,
- is not limited to providing reports for which OLAP data structures (i.e. cubes) exist, and
- does not require more than one single persistence for both OLTP and OLAP.

Main memory technologies such as the column-oriented storage paradigm can be used to realize this architecture. The architecture has been validated with a prototypical implementation on the basis of SAP Business ByDesign, a mid-market business software solution. A case study from financial accounting has been introduced to illustrate one possible application of the proposed reporting architecture. Real customer financial data has been used to generate test data sets of different sizes. A prototypical implementation was benchmarked against the direct extraction of the data for the presented reporting use case from SAP Business ByDesign. The results have shown that it is possible to produce a report with the totals of all accounts, each of which is aggregated from a table containing 10 million rows, within a response time of 2.1 seconds. The implications of these results are that the storage of aggregates in cube-like structures is - at least in the area of financial accounting - no longer required.

### Future Work

The most important task in traditional DWprojects is defining the process how data is extracted from various sources and then integrated in the DW. The ETL process comprises activities such as accessing different source databases, finding and resolving inconsistencies among the source data, transforming between different data formats or languages, and loading the resulting data into the DW. The approach of the present invention aims at moving the ETL activities to query runtime. When doing so, it is probably most challenging to map the transformation steps in ETL processes to operations which can be efficiently computed on-the-fly using main memory technologies. The case study that was presented contained only one type of transformation activity: aggregation. In order to be able to provide all different kinds of reports directly on top of OLTP systems, other types of transformation activities must be taken into account. Transformation activities can be of atomic or composed nature. An example from the field of controlling would be to show a list containing the opening and closing balance of an account from January to December of a given year: For each month m, an aggregation has to be done on only those line items carrying a date between January 1st and the last day of m. The result is then both the closing balance of m and the opening balance of m + 1. In this example, the sum operator (i.e. the aggregation) would be an atomic transformation. A composed transformation is used to model the process of creating all opening and closing balances. For every complex report, such workflow-like models could be used for describing the transformations. Simitsis, Vassiliadis, and Sellis treat ETL processes as workflows in order to find optimizations [A. Simitsis, P. Vassiliadis, and T. Sellis. State-Space Optimization of ETL Workflows. IEEE Transactions on Knowledge and Data Engineering, 17(10):1404-1419, 2005]. Their research is, however, aimed at optimizing traditional, batch job-like ETL processes. Workflow models for on-the-fly ETL processes have not been investigated, and is thus one direction of future work. The corresponding research tasks include the identification of complex reporting scenarios and the complex transformations they require. An adequate abstraction must then be found for these transformations, so that they can be generalized to build ETL workflows with them. Then, efficient implementations must be found for the identified transformations.

In the prototypical implementation, the main memory database (TREX) is accessed using SQL. Since SQL is a language for set-based retrieval of data, it is not suited for the retrieval of hierarchically structured data as it is stored in OLAP systems. For this purpose MDX is typically used, which is supported by most databases tailored for OLAP environments. Having in mind that composed transformation activities could be used to describe the transformations between OLTP data and reports, it might make sense to extend languages like MDX or XQuery with composed transformation constructs.

The prototypical implementation presented here uses SAP TREX as the main memory database that stores the OLTP data. However, other database products with similar characteristics, such as column-orientation, exist. In the near future, we will therefore extend our measurements to experiments with MonetDB and Vertica.

## Claims

1. A computer system that implements a computer program for processing database information for both transacting and reporting, said computer program comprising:
a relational database management system component (204) that stores said database information in a row format; and
a column-oriented data processing component (206) that stores said database information in a column format,
wherein in response to a database update request, said relational database management system component (204) updates said database information stored in said row format, said relational database management system component (204) notifies said column-oriented data processing component (206) of said database update request, and said column-oriented data processing component (206) updates said database information stored in said column format,
wherein in response to a query request, said column-oriented data processing component (206) generates a query response based on said database information stored in said column format.

2. The computer system of claim 1, wherein said computer program further comprises:
a virtual cube interface component that maps an on-line analytical processing query into an aggregation call, and that sends said aggregation call to said column-oriented data processing component (206) as said query request.

3. The computer system of claim 1, wherein said database information stored in said row format and said database information stored in said column format are stored in a main memory of said computer system.

4. The computer system of claim 1, wherein the column-oriented data processing component (206) is implemented by a plurality of networked computers.

5. A computer-implemented method of processing database information for both transacting and reporting, comprising the steps of:
storing said database information in a row format;
storing said database information in a column format;
in response to a database update request, updating said database information stored in said row format, locking said database information stored in said row format, updating said database information stored in said column format, and unlocking said database information stored in said row format after said database information stored in said column format has been updated; and
in response to a query request, generating a query response based on said database information stored in said column format.

## Patentansprüche

1. Computersystem, das ein Computerprogramm zur Verarbeitung von Datenbankinformationen sowohl für die Transaktion als auch für das Reporting implementiert, wobei das Computerprogramm umfasst:
eine relationale Datenbankmanagementsystemkomponente (204), die die Datenbankinformationen in einem Zeilenformat speichert; und
eine spaltenorientierte Datenverarbeitungskomponente (206), die die Datenbankinformationen in einem Spaltenformat speichert,
wobei die relationale Datenbankmanagementsystemkomponente (204) als Reaktion auf eine Datenbankupdateanforderung die in dem Zeilenformat gespeicherten Datenbankinformationen aktualisiert, wobei die relationale Datenbankmanagementsystemkomponente (204) die spaltenorientierte Datenverarbeitungskomponente (206) über die Datenbankupdateanforderung informiert, und die spaltenorientierte Datenverarbeitungskomponente (206) die in dem Spaltenformat gespeicherten Datenbankinformationen aktualisiert,
wobei die spaltenorientierte Datenverarbeitungskomponente (206) als Reaktion auf eine Abfrageanforderung eine Abfrageantwort basierend auf den in dem Spaltenformat gespeicherten Datenbankinformationen erzeugt.

2. Computersystem nach Anspruch 1, wobei das Computerprogramm ferner umfasst:
eine Virtual Cube-Schnittstellenkomponente, die eine online-analytische Verarbeitungsanfrage in einen Aggregationsaufruf abbildet und den Aggregationsaufruf an die spaltenorientierte Datenverarbeitungskomponente (206) als die Abfrageanforderung sendet.

3. Computersystem nach Anspruch 1, wobei die in dem Zeilenformat gespeicherten Datenbankinformationen und die in dem Spaltenformat gespeicherten Datenbankinformationen in einem Hauptspeicher des Computersystems gespeichert sind.

4. Computersystem nach Anspruch 1, worin die spaltenorientierte Datenverarbeitungskomponente (206) durch eine Vielzahl von vernetzten Computern implementiert ist.

5. Computerimplementiertes Verfahren zum Verarbeiten von Datenbankinformationen sowohl für die Transaktion als auch für das Reporting, umfassend die Schritte:
Speichern der Datenbankinformationen in einem Zeilenformat;
Speichern der Datenbankinformationen in einem Spaltenformat;
als Reaktion auf eine Datenbankupdateanforderung Aktualisieren der in dem Zeilenformat gespeicherten Datenbankinformationen, Sperren der in dem Zeilenformat gespeicherten Datenbankinformationen, Aktualisieren der in dem Spaltenformat gespeicherten Datenbankinformationen und Entsperren der in dem Zeilenformat gespeicherten Datenbankinformationen, nachdem die in dem Spaltenformat gespeicherten Datenbankinformationen aktualisiert wurden; und
als Reaktion auf eine Abfrageanforderung Erzeugen einer Abfrageantwort basierend auf den in dem Spaltenformat gespeicherten Datenbankinformationen.

## Revendications

1. Système informatique qui met en oeuvre un programme informatique pour le traitement d'informations de base de données à la fois pour l'exécution de transactions et de rapports, ledit programme informatique comprenant :
un composant de système de gestion de base de données relationnelles (204) qui stocke lesdites informations de base de données dans un format de lignes ; et
un composant de traitement de données orienté colonne (206) qui stocke lesdites informations de base de données dans un format de colonnes,
dans lequel, en réponse à une demande de mise à jour de base de données, ledit composant de système de gestion de base de données relationnelles (204) met à jour lesdites informations de base de données stockées dans ledit format de lignes, ledit composant de système de gestion de base de données relationnelles (204) notifie ladite demande de mise à jour de base de données audit composant de traitement de données orienté colonne (206), et ledit composant de traitement de données orienté colonne (206) met à jour lesdites informations de base de données stockées dans ledit format de colonnes,
dans lequel, en réponse à une demande d'interrogation, ledit composant de traitement de données orienté colonne (206) génère une réponse d'interrogation, sur la base desdites informations de base de données stockées dans ledit format de colonnes.

2. Système informatique selon la revendication 1, dans lequel ledit programme informatique comprend en outre :
un composant d'interface de cube virtuel qui mappe une interrogation de traitement analytique en ligne dans un appel d'agrégation et qui envoie ledit appel d'agrégation audit composant de traitement de données orienté colonne (206) comme ladite demande d'interrogation.

3. Système informatique selon la revendication 1, dans lequel lesdites informations de base de données stockées dans ledit format de lignes et lesdites informations de base de données stockées dans ledit format de colonnes sont stockées dans une mémoire principale dudit système informatique.

4. Système informatique selon la revendication 1, dans lequel le composant de traitement de données orienté colonne (206) est mis en oeuvre par une pluralité d'ordinateurs mis en réseau.

5. Procédé mis en oeuvre par ordinateur de traitement d'informations de base de données à la fois pour l'exécution de transactions et de rapports, comprenant les étapes suivantes :
le stockage desdites informations de base de données dans un format de lignes ;
le stockage desdites informations de base de données dans un format de colonnes ;
en réponse à une demande de mise à jour de base de données, la mise à jour desdites informations de base de données stockées dans ledit format de lignes, le blocage desdites informations de base de données stockées dans ledit format de lignes, la mise à jour desdites informations de base de données stockées dans ledit format de colonnes, et le déblocage desdites informations de base de données stockées dans ledit format de lignes après que lesdites informations de base de données stockées dans ledit format de colonnes ont été mises à jour ; et
en réponse à une demande d'interrogation, la génération d'une réponse d'interrogation sur la base desdites informations de base de données stockées dans ledit format de colonnes.
